# EUROPÄISCHE PATENTSCHRIFT

(11) **EP 1 847 868 B1**
(45) Veröffentlichungstag und Bekanntmachung des Hinweises auf die Patenterteilung: **07.01.2009**
(21) Anmeldenummer: 07105576.8
(22) Anmeldetag: 03.04.2007
(51) Int. Cl.: G02C 11/06

(54) **Hinter-dem-Ohr-Hörgerät einschließlich Brillenadapter mit dünnem Schallschlauch**
Behind the ear hearing device including a spectacles adapter with a thin acoustic tube
Appareil auditif derrière l'oreille incluant un adaptateur de lunette avec canal acoustique fin

(30) Priorität: 19.04.2006 DE 102006018154
(43) Veröffentlichungstag der Anmeldung: 24.10.2007
(73) Patentinhaber: Siemens Audiologische Technik GmbH, 91058 Erlangen (DE)
(72) Erfinder: Fickweiler, Werner, 91088, Bubenreuth (DE); Grafenberg, Esfandiar, 91090, Effeltrich (DE)
(74) Vertreter: Maier, Daniel Oliver

(56) Entgegenhaltungen:
- DE-A1- 2 948 847
- DE-A1- 3 027 080
- DE-A1- 3 627 117
- DE-B- 1 172 316
- DE-U1- 8 711 333
- US-A- 2 999 136
- US-A- 5 737 436

## Beschreibung

Die vorliegende Erfindung betrifft ein Hinter-dem-Ohr-Hörgerät für Brillenträger mit einem Hörgerätegehäuse, das einen Schallauslass aufweist, und einem Brillenbügeladapter, der an das Hörgerätegehäuse befestigt und an einen Brillenbügel anbringbar ist. Unter dem Begriff "Hörgerät" kann hier auch allgemein eine Hörvorrichtung verstanden werden, die über einen Brillenadapter mit einer Brille verbunden werden kann und hinter dem Ohr getragen wird. Als derartige Hörvorrichtung käme beispielsweise ein Headset oder Kopfhörer in Frage.

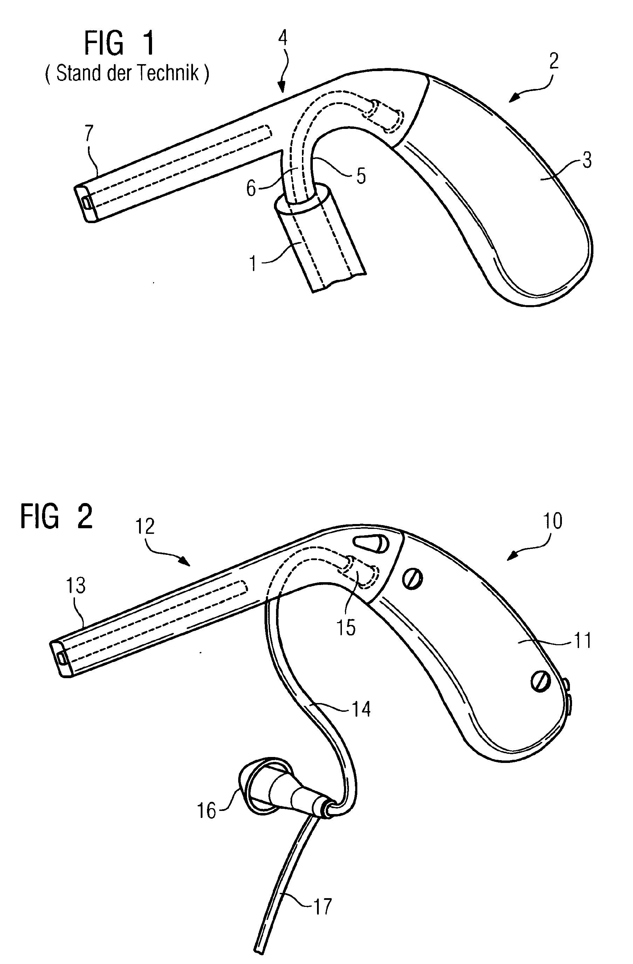

Üblicherweise besitzt der Schallschlauch eines Hinter-dem-Ohr-Hörgeräts (HdO), mit dem der Schall vom Hörgerät zum Ohrkanal übertragen wird, einen Außendurchmesser von mindestens 3 mm. Ein derartiger Schlauch 1 ist in FIG 1 fixiert an einem Hörgerät 2 schematisch dargestellt. Zum Anschluss des Schlauchs 1 an dem Hörgerätegehäuse 3 des Hörgeräts 2 wird ein Brillenadapter 4 eingesetzt. Er wird an das Hörgerätegehäuse 3 angesteckt oder angeschraubt. Der Brillenadapter 4 hat gleichzeitig die Funktion eines Tragehakens, wie er von üblichen HdOs bekannt ist, und besitzt daher einen Tragehakenabschnitt 5. Im Inneren des Tragehakenabschnitts 5 verläuft ein Schallkanal 6, der den Schall von einem Schallauslassstutzen des Hörgerätegehäuses 3 zum Schallschlauch 1 leitet. Der Schallschlauch 1 ist auf das Ende des Tragehakenabschnitts 5 gesteckt oder geklebt. Dies ist ohne weiteres möglich, da er einen ausreichend großen Innen- und Außendurchmesser besitzt.

An den Tragehakenabschnitt 5 des Brillenadapters 4 ist ein Brillenbügelhalteabschnitt 7 angeformt. In ihn lässt sich das Ende eines Brillenbügels einstecken bzw. einkleben.

Aus kosmetischen Gründen bevorzugen Hörgeräteträger jedoch dünnere Schläuche, die weniger optisch auffällig sind, wenn sie im oberen, vorderen Bereich der Ohrmuschel getragen werden. Als dünne Schläuche gelten hier Schläuche, deren Außendurchmesser höchstens 2 mm beträgt. Brillenträger, die ein HdO mit einem derartigen, dünnen Schlauch nützen wollen, müssen sich bislang damit abfinden, dass der Brillenbügel und das HdO mit dem Schlauch hinter der Ohrmuschel Platz finden muss. Dadurch wirkt das Hörgerät größer und es entstehen Druckstellen an der Haut.

Aus der Druckschrift WO 97/11574 A1 ist eine Hörvorrichtung für Brillenträger bekannt. Mit Hilfe eines Adapters kann der Brillenbügel an den Schallschlauch der Hörvorrichtung, die in den Gehörgang geführt wird, befestigt werden. Alternativ kann der Adapter auch dazu verwendet werden, den Brillenbügel an dem Hörvorrichtungsmodul selbst zu befestigen.

Darüber hinaus ist in der Druckschrift EP 1 727 393 A1 eine Verbinderanordnung zum Verbinden eines Ohrstücks eines Hörgeräts mit dem Brillenbügel beschrieben. Der Brillenbügel selbst dient als Gehäuse für die Hörgeräteelektronik. Ein Schallschlauch, der an den Brillenbügel befestigt ist, transportiert den Schall zu einem im Ohr getragenen Ohrstück.

Ferner offenbart das US-Patent 3,825,700 ein zweiteiliges Hörgerätegehäuse, das gleichzeitig als Brillenbügel dient. Die beiden Gehäuseteile sind mit einem Koppelelement verbunden, durch das ein Schallschlauch geführt ist.

Schließlich offenbart das US-Patent 3,102,172 ebenfalls einen Brillenbügel, der als Hörgerätegehäuse dient. Aus dem Hörgerätegehäuse ist ein Schallschlauch herausgeführt, der zu einem Ohrstück führt.

Aus der Druckschrift DE 30 27 080 A1 ist ein Gehäuse für die Aufnahme eines Hörgeräts bekannt. Wenn das Hörgerät in das Gehäuse eingesetzt ist, kann ein nach Art eines Tragbügels ausgeführter Schallschlauch durch eine Austrittsöffnung und einen Schallkanal hindurch auf einen Schallausgangsstutzen aufgesetzt werden.

Weiterhin offenbart die Patentschrift US 5 737 436 ein Hörgerät mit einem Brillenadapter. Der Adapter besitzt zwei Befestigungselemente, um ihn einerseits am Ende eines Brillenbügels und andererseits an einem Schallschlauch oder dem Gehäuse eines Hörgeräts zu befestigen.

Ferner ist in der Druckschrift DE 29 48 847 A1 eine Hörbrille beschrieben, bei der ein Hörgerät mit Hilfe eines Anschlussstücks an einem Brillenbügel befestigt ist. Das Anschlussstück ist ein Hohlkörper mit einer am hinteren Ende liegenden Öffnung für das Einschieben des Hörgeräts einschließlich des damit verbundenen, den Schallaufnahmekanal mit Einsprechöffnungen und den Schallwiedergabekanal enthaltenden Tragbügels. Der Hohlkörper weist eine an der Unterseite liegende Austrittsöffnung für den Tragbügel und seitliche Einsprechöffnungen auf.

Die Aufgabe der vorliegenden Erfindung besteht somit darin, ein Hinter-dem-Ohr-Hörgerät mit dünnem Schallschlauch anzugeben, das zusammen mit einer Brille komfortabler getragen werden kann.

Erfindungsgemäß wird diese Aufgabe gelöst durch ein Hinter-dem-Ohr-Hörgerät für Brillenträger mit einem Hörgerätegehäuse, das einen Schallauslass aufweist, und einem Brillenbügeladapter, der direkt an das Hörgerätegehäuse befestigt und an einen mit dem Hörgerätegehäuse zweiteilig gebildeten Brillenbügel anbringbar ist, wobei ein Hörschlauch zur Schallübertragung in einen Ohrkanal durch den Brillenbügeladapter hindurch bis zum Schallauslass des Hörgerätegehäuses geführt ist. Der Hörschlauch ist in den Brillenadapter eingespritzt. Durch ein Zweikomponentenspritzgussverfahren kann dies ohne weiteres realisiert werden und der Logistik- und Montageaufwand für das Hörgerät bzw. die Hörvorrichtung lassen sich so reduzieren.

In vorteilhafter Weise können bei einem derartigen Hinter-dem-Ohr-Hörgerät dünne Hörschläuche verwendet werden. Diese finden eine erhöhte Akzeptanz in kosmetischer Hinsicht. Darüber hinaus findet das Hörgerät mit Hilfe des Brillenbügeladapters Halt an der Ohrmuschel und es kann auf einen auffälligen Tragehaken verzichtet werden.

Vorzugsweise besitzt der Hörschlauch einen Außendurchmesser von höchstens 2 mm. Damit wird bei den Hörgeräteträgern eine besonders hohe Akzeptanz erreicht.

Der Hörschlauch, der auch als Schallschlauch bezeichnet werden kann, wird vorteilhafterweise an den Schallauslass des Hörgerätegehäuses angeschraubt, angesteckt oder angeklebt. Damit kann eine schalldichte Verbindung zum Hörgerätegehäuse bzw. zum Hörer im Hörgerätegehäuse hergestellt werden.

Entsprechend einer anderen Weiterbildung kann der Brillenadapter oder ein Teil davon mit dem Hörgerätegehäuse oder einem Teil davon einteilig verbunden sein. Auch hierdurch besteht die Möglichkeit, die Einzelteile eines Hörgeräts bzw. einer Hörvorrichtung zu reduzieren. Der Hörschlauch kann dann beispielsweise zwischen zwei Halbschalen, die das Hörgerätegehäuse zusammen mit dem Brillenadapter bilden, montiert werden.

Der Brillenadapter kann aber auch an das Hörgerätegehäuse anschraubbar oder ansteckbar sein. Damit lässt sich ein und derselbe Brillenbügeladapter für unterschiedliche Hörgerätegehäuse nutzen.

Die vorliegende Erfindung ist anhand der beigefügten Zeichnungen näher erläutert, in denen zeigen:
FIG 1 ein Hinter-dem-Ohr-Hörgerät mit einem Brillenadapter gemäß dem Stand der Technik und
FIG 2 ein erfindungsgemäßes Hinter-dem-Ohr-Hörgerät mit Brillenadapter und dünnem Schallschlauch.

Das nachfolgend näher geschilderte Ausführungsbeispiel stellt eine bevorzugte Ausführungsform der vorliegenden Erfindung dar.

Bei dem in FIG 2 dargestellten Hörgerät 10 ist das Hörgerätegehäuse 11 mit einem Brillenadapter 12 verbunden. Typischerweise erfolgt diese Verbindung durch Stecken oder Schrauben. Der Brillenadapter 12 ist länglich ausgeführt und mit dem dem Hörgerätegehäuse 11 gegenüberliegenden Ende 13 an einem nicht dargestellten Brillenbügel befestigbar. Hierzu besitzt er eine sacklochförmige Aussparung wie auch der Brillenadapter aus dem Stand der Technik gemäß FIG 1.

Der Brillenadapter 12 besitzt hier keinen Tragehaken, auf den ein dicker Hörschlauch aufgeschoben werden kann. Vielmehr wird hier ein dünner Hörschlauch 14 in einem entsprechenden

Kanal innerhalb des Brillenadapters 12 zu dem Anschlussende des Brillenadapters 12 an das Hörgerätegehäuse 11 geführt. Dort ist der Hörschlauch 14 eingespritzt. Durch die Hülse 15 wird der Hörschlauch 14 mit einem Schallauslassstutzen des Hörgeräts 10 bzw. des Hörgerätegehäuses 11 schalldicht verbunden.

Der dünne Hörschlauch 14 verläuft in den Kanal des Adapters 12 von der Hülse 15 zunächst in etwa in Längsrichtung des Brillenadapters 12. Dann verlässt er den Brillenadapter 12 bogenförmig, so dass sich durch den Hörschlauch 14 und den Brillenadapter 12 praktisch auch ein Tragehaken ergibt, mit dem ein stabiler Sitz des Hörgeräts hinter der Ohrmuschel möglich ist.

An dem freien Ende des Hörschlauchs 14 befindet sich in dem Beispiel von FIG 2 ein Ohrpassstück 16. An ihm ist ein flexibles längliches Fixierungselement 17 angeformt. Dieses Fixierungselement 17 lässt sich in die Wölbungen einer Ohrmuschel einspannen und sorgt somit für verbesserten Halt des Ohrpassstücks 16 in dem Gehörgang.

Durch die Vermeidung eines verhältnismäßig voluminösen Tragehakens und eines daran befestigten dicken Hörschlauchs wirkt das Hörgerät einschließlich des Schlauchs unauffälliger. Auch können mit dem erfindungsgemäßen Brillenadapter Druckstellen am Ohr des Hörgeräteträgers vermieden werden, auch wenn dieser eine Brille trägt und trotzdem ein Hörgerät mit dünnem Hörschlauch verwenden will.

Außerdem gewährleistet der erfindungsgemäß durch den Brillenbügeladapter 12 geführte Hörschlauch 14 den direkten Anschluss des Hörschlauchs 14 an den Schallauslassstutzen des Hörgerätegehäuses 11, ohne dass ein Schallführungskanal im Brillenbügeladapter dazwischen geschaltet werden müsste, wodurch die akustischen Verluste verringert werden.

## Patentansprüche

1. Hinter-dem-Ohr-Hörgerät für Brillenträger mit
- einem Hörgerätegehäuse (11), das einen Schallauslass aufweist,
- einem Brillenbügeladapter (12), der direkt am Hörgerätegehäuse (11) befestigt und an einen mit dem Hörgerätegehäuse zweiteilig gebildeten Brillenbügel anbringbar ist,
**dadurch** gekennzeichet, dass
- ein Hörschlauch (14) zur Schallübertragung in einen Ohrkanal durch den Brillenbügeladapter (12) hindurch bis zum Schallauslass des Hörgerätegehäuses (11) geführt ist,
wobei
- der Hörschlauch (14) in den Brillenadapter (12) eingespritzt ist.

2. Hinter-dem-Ohr-Hörgerät nach Anspruch 1, wobei der Hörschlauch (14) einen Außendurchmesser von höchstens 2 mm besitzt.

3. Hinter-dem-Ohr-Hörgerät nach Anspruch 1 oder 2, wobei der Hörschlauch (14) an dem Schallauslass des Hörgerätegehäuses (11) angeschraubt, angesteckt oder angeklebt ist.

4. Hinter-dem-Ohr-Hörgerät nach einem der vorhergehenden Ansprüche, wobei der Brillenadapter (12) oder ein Teil davon mit dem Hörgerätegehäuse (11) oder einem Teil davon einteilig verbunden ist.

5. Hinter-dem-Ohr-Hörgerät nach einem der Ansprüche 1 bis 3, wobei der Brillenadapter (12) an das Hörgerätegehäuse (11) anschraubbar oder ansteckbar ist.

## Claims

1. Behind-the-ear hearing device for eyeglass wearers comprising
- a hearing device housing (11), having a sound outlet, and
- an eyeglass temple adapter (12), directly fastened to the hearing device housing (11) and attachable to the eyeglass temple formed with the hearing device housing in two parts,
**characterised in that**
- a hearing tube (14) is routed for transmission of sound in an auditory canal via an eyeglass temple adapter (12) to the sound outlet of the hearing device housing (11),
wherein
- the hearing tube (14) is injection moulded into the eyeglass adapter.

2. Behind-the-ear hearing device according to claim 1, the hearing tube (14) having a maximum external diameter of 2 mm.

3. Behind-the-ear hearing device according to claim 1 or 2, the hearing tube (14) being screwed, clipped or glued to the sound outlet of the hearing device housing.

4. Behind-the-ear hearing device according to one of the preceding claims, the eyeglass adapter (12) or a part thereof being connected in one piece to the hearing device housing (11) or part thereof.

5. Behind-the-ear hearing device according to one of claims 1 to 3, the eyeglass adapter (12) being screwable or clippable to the hearing device housing (11).

## Revendications

1. Prothèse auditive à porter derrière l'oreille pour des porteurs de lunette, comprenant
- un boîtier ( 11 ) de prothèse auditive, qui a une sortie pour le son,
- un adaptateur ( 12 ) de branche de lunette, qui est fixé directement sur le boîtier ( 11 ) de la prothèse auditive et qui peut être mis sur une branche de lunette formée en deux parties avec le boîtier de la prothèse auditive,
**caractérisée en ce que**
- un tube ( 14 ) souple d'audition pour la transmission du son dans un canal auriculaire passe à travers l'adaptateur ( 12 ) de branche de lunette jusqu'à la sortie pour le son du boîtier ( 11 ) de la prothèse auditive,
- dans laquelle
- le tuyau souple ( 14 ) d'audition est injecté dans l'adaptateur ( 12 ) de lunette.

2. Prothèse auditive à porter derrière l'oreille selon la revendication 1 dans laquelle le conduit ( 14 ) souple d'audition à un diamètre de 2 mm au plus.

3. Prothèse auditive à porter derrière l'oreille selon la revendication 1 ou 2, dans laquelle le conduit ( 14 ) souple d'audition est vissé, enfilé ou collé sur la sortie pour le son du boîtier ( 11 ) de la prothèse auditive.

4. Prothèse auditive à porter derrière l'oreille suivant l'une des revendications précédentes, dans laquelle l'adaptateur ( 12 ) de lunette ou l'une de ses parties est reliée d'une seule pièce avec le boîtier ( 11 ) de la prothèse auditive ou avec l'une de ces parties.

5. Prothèse auditive à porter derrière l'oreille selon l'une des revendications 1 à 3, dans laquelle l'adaptateur ( 12 ) de lunette peut être vissé ou enfilé sur le boîtier ( 11 ) de la prothèse.
